# EUROPÄISCHE PATENTSCHRIFT

(11) **EP 0 617 202 B1**
(45) Veröffentlichungstag und Bekanntmachung des Hinweises auf die Patenterteilung: **21.05.1997**
(21) Anmeldenummer: 94102591.8
(22) Anmeldetag: 21.02.1994
(51) Int. Cl.: F15B 15/22

(54) **Vorrichtung zur Endlagendämpfung eines bewegten Systems**
End-of-stroke-cushioning device for a movable system
Dispositif amortisseur de fin de course pour un système mobile

(30) Priorität: 22.02.1993 DE 4305401
(43) Veröffentlichungstag der Anmeldung: 28.09.1994
(73) Patentinhaber: Fibro GmbH, D-74189 Weinsberg (DE)
(72) Erfinder: Massmann, Hans-Joachim, D-74831 Gundelsheim (DE)
(74) Vertreter: Finsterwald, Manfred, Dipl.-Ing., Dipl.-Wirtsch.-Ing.

(56) Entgegenhaltungen:
- EP-A- 0 004 483
- EP-A- 0 377 529
- DE-A- 1 955 238
- DE-B- 1 292 491

## Beschreibung

Die Erfindung betrifft eine Vorrichtung zur Endlagendämpfung eines bewegten Systems bestehend aus einem vom bewegten System beaufschlagten Kolben, der in einem Zylinder axial verschieblich aufgenommen ist, einem im Bereich einer ersten Stirnseite des Zylinders vorgesehenen absperrbaren Hauptauslaß für im vom Kolben und vom Zylinder umgrenzten Kolbenraum enthaltenes Druckfluid, einem mit dem Hauptauslaß verbundenen Auslaßkanal, einem im Bereich der ersten Stirnseite vorgesehenen Nebenauslaß für das Druckfluid sowie einem den Nebenauslaß mit dem Auslaßkanal verbindenden Drosselventil, wobei das Ventilglied des Drosselventils mit einem Regelkolben verbunden ist, der in einem Regelzylinder axial verschieblich aufgenommen ist und diesen in einen ersten Regelkolbenraum und einen zweiten Regelkolbenraum unterteilt, eine Druckfluidverbindung zwischen dem Nebenauslaß und dem ersten Regelkolbenraum vorgesehen ist und im zweiten Regelkolbenraum eine in Richtung einer Volumenverringerung des ersten Regelkolbenraums auf den Regelkolben wirkende Krafterzeugseinrichtung vorgesehen ist, die insbesondere aus einer den Regelkolben beaufschlagenden, vorzugsweise von Tellerfedern gebildeten Federanordnung besteht.

Bekannte Vorrichtung zur Endlagendämpfung arbeiten zumeist pneumatisch oder hydraulisch und üblicherweise mit fest eingestellten Drosselspalten. Durch sich je nach Einzelfall verändernde Einflußgrößen, wie beispielsweise der bewegten Masse, der Anfahrgeschwindigkeit, des Hubtaktes oder durch Veränderungen in Folge von Temperaturschwankungen weisen derartige bekannte Vorrichtungen häufig ein nicht konstantes Einfahrverhalten in die Endlage auf. Darüber hinaus erweist sich die Einstellung des vom Drosselventil gebildeten Drosselspalts einer derartigen bekannten Vorrichtung als sehr kritisch, da oftmals minimale Verstellungen ausreichen, um ein sich stark veränderndes Einfahrverhalten zu bewirken, so daß derartige Vorrichtungen eine große Einstellempfindlichkeit aufweisen.

Aus der DE-A-19 55 238 ist eine Vorrichtung für die Bewegungssteuerung eines in einem Zylinder unter der Wirkung eines Druckmittels verschieblichen Kolbens in seiner Endstellung bekannt. Am Boden des Zylinders ist eine axiale Endkammer vorgesehen, in die eine Öffnung für den Ein- und Auslaß des Druckmittels mündet und bei Hubende des Kolbens ein Fortsatz des Kolbens eingreift. Die Öffnung ist mit dem Boden des Zylinders über einen Kanal verbunden, der über ein als Nadelventil ausgebildetes Ventilglied absperrbar ist. Das Nadelventil wird durch eine Feder in der Sperrstellung unter Vorspannung gehalten, wobei die Vorspannung durch eine auf die Feder einwirkende Stellschraube einstellbar ist. Über die Stellschraube kann die Vorspannung der Feder so eingestellt werden, daß die Kolbengeschwindigkeit ohne Stöße oder Rückprallen gleichmäßig abnimmt.

Der vorliegenden Erfindung liegt die Aufgabe zugrunde, eine Vorrichtung der gattungsgemäßen Art derart auszubilden, daß sowohl das Einfahrverhalten als auch die Einstellbarkeit der Vorrichtung verbessert sind.

Diese Aufgabe wird ausgehend von dem Oberbegriff des Anspruchs 1 dadurch gelöst, daß die Krafterzeugungseinrichtung einen in den zweiten Regelkolbenraum mündenden Steuerdruckanschluß für ein auf den Regelkolben wirkendes Steuerdruckfluid umfaßt.

Der bei abgesperrtem Hauptauslaß einerseits vom Druck im Nebenauslaß und andererseits von der Krafterzeugungseinrichtung beaufschlagte Regelkolben steuert - bei beispielsweise konstanter von der Krafterzeugungseinrichtung ausgeübter Kraft - in Abhängigkeit des im Kolbenraum herrschenden Druckes die Öffnung des Drosselventils und damit die Bremscharakteristik der Vorrichtung zur Endlagendämpfung. Das Bremsdruckniveau wird dabei vom Regelkolben und dem mit diesem verbundenen Drosselventil konstant gehalten und Druckschwankungen werden ausgeregelt, indem die Öffnung des Drosselventils entsprechend vergrößert bzw. verkleinert wird. Durch Veränderung der von der Krafterzeugungseinrichtung auf den Riegelkolben ausgeübten Kraft kann die Bremsdruckcharakteristik verstellt werden. Dabei ist es insbesondere vorteilhaft, wenn die Krafterzeugungseinrichtung eine Federanordnung umfaßt, die aus Tellerfedern zusammengesetzt sein kann.

Durch die erfindungsgemäße Ausbildung der Krafterzeugungseinrichtung kann über den Steuerdruckanschluß ein einem vorgegebenen Druckschwellwert entsprechender Steuerdruck auf den Regelkolben einwirken. Hierdurch ist vorteilhaft eine schnelle und sehr feine Einstellung der Bremscharakteristik möglich, so daß sowohl das Einfahrverhalten als auch die Einstellbarkeit der Vorrichtung verbessert sind.

Entsprechend der Dimensionierung der Krafterzeugungseinrichtung kann die druckgeregelte Endlagendämpfung in eine druckbzw. geschwindigkeitsgesteuerte Endlagendämpfung funktionell verändert werden.

Auf diese Weise ist es möglich, entsprechend der Ausbildung der Krafterzeugungseinrichtung unterschiedliche, gezielte vorgebbare Einfahrergebnisse zu realisieren.

Die ventiltechnische Beschaltung von Kolbetrieben kann in üblicher Weise durchgeführt werden, und zwar in Verbindung mit der erfindungsgemäßen Vorrichtung zur Endlagendämpfung, wie sie in den Ansprüchen beschrieben ist.

Die Erfindung wird nachfolgend anhand eines Beispiels unter Bezugnahme auf die Zeichnung näher erläutert; in dieser zeigt:
- Figur 1: eine Vorrichtung zur hydraulischen Endlagendämpfung,
- Figur 2: eine Vorrichtung zur pneumatischen Endlagendämpfung,
- Figur 3: eine von einem Regeldruck beaufschlagte Vorrichtung ähnlich Figur 1,
- Figur 4: eine von einem Regeldruck beaufschlagte Vorrichtung ähnlich Figur 2,
- Figur 5: eine auch für die Dämpfung von Zwischenpositionen ausgestaltete Vorrichtung zur gendämpfung,
- Figur 6: eine Abwandlung von Figur 5,
- Figur 7: eine weitere Abwandlung von Figur 5 mit einem Betätigungsglied für Zwischenpositionen,
- Figur 8: eine Vorrichtung ähnlich Figur 6 mit einem Betätigungsglied für Zwischenpositionen,
- Figur 9: eine regeldruckbeaufschlagte Vorrichtung zur Endlagendämpfung ähnlich Figur 5,
- Figur 10: eine Vorrichtung zur hydraulischen Endlagendämpfung in Form eines Anschlagelements,
- Figur 11: eine weitere Vorrichtung zur pneumatischen Endlagendämpfung in Form eines Anschlagelements,
- Figur 12: einen Rotationsantrieb mit zweiseitig wirkender Vorrichtung zur Endlagendämpfung und
- Figur 13: einen Rotationsantrieb mit einer zweiseitig wirkenden Endlagendämpfung und zusätzlichem Zwischenanschlag.

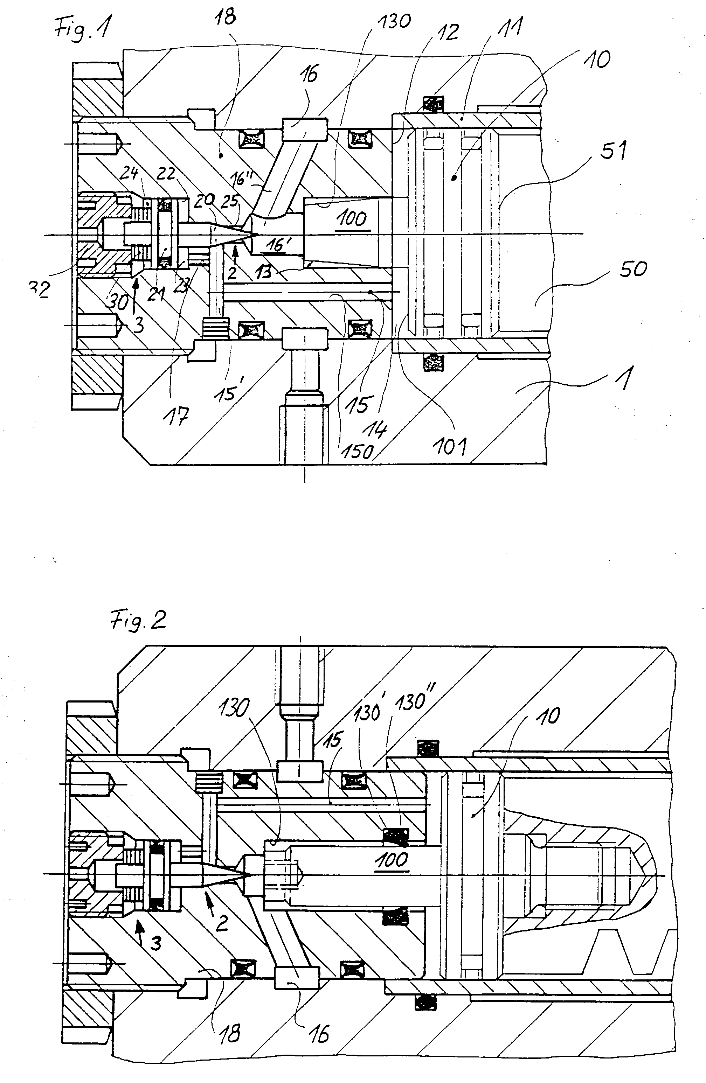

In Figur 1 ist eine Vorrichtung zur Endlagendämpfung dargestellt, die ein Gehäuse 1 aufweist, in das ein Zylinder 11 eingesetzt ist, in welchem ein bewegbares Element 50 eines bewegten Systems axial hin- und herfahrbar ist. Am einen Ende 51 des bewegbaren Elementes 50 ist ein Kolben 10 angeordnet, der abdichtend im Zylinder 11 gemeinsam mit dem bewegbaren Element 50 verschiebbar ist. Der Kolben ist an seiner freien Stirnseite 101 mit einem zentralen Axialansatz 100 versehen.

Ein Einsatzstück 18 ist koaxial zum Zylinder 11 in dessen Verlängerung in das Gehäuse 1 eingesetzt und bildet mit seiner dem Kolben 10 zugewandten Stirnseite die erste Stirnseite 12 des Zylinders. Auf diese Weise ist vom Kolben 10, vom Zylinder 11 und von der ersten Stirnseite 12 ein Kolbenraum 14 umschlossen.

In der ersten Stirnseite 12 ist eine zentrale Axialbohrung 130 vorgesehen, die den Hauptauslaß 13 für das im Kolbenraum 14 vorhandene Druckfluid bildet. Der Hauptauslaß 13 ist dabei über Kanäle 16', 16'' mit dem Auslaßkanal 16 verbunden. Der Innenumfang der zentralen Axialbohrung 130 ist so bemessen, daß der zentrale Axialansatz 100 des Kolbens 10 abdichtend in die Axialbohrung 130 eindringen kann.

In der Stirnseite 12 ist weiterhin eine dezentrale, achsparallele Bohrung 150 vorgesehen, die einen Nebenauslaß 15 für das Druckfluid aus dem Kolbenraum 14 bildet.

Der Nebenauslaß 15 führt über einen Kanal 15' zu einem Drosselventil 2. Das als Nadelventil ausgebildete Drosselventil 2 steuert den Durchfluß zwischen dem Kanal 15' des Nebenauslasses 15 und dem Kanal 16', der Teil der Fluidverbindung zwischen dem Hauptauslaß 13 und dem Auslaßkanal 16 ist. Das Ventilglied 20 des Drosselventils 2 ist an seiner dem Ventilsitz 25 abgewandten Seite mit einem Regelkolben 21 verbunden, der in einem im Einsatzstück 18 axial vorgesehenen Regelzylinder 22 axial verschieblich aufgenommen ist. Der gelkolben 21 unterteilt dabei den vom Regelzylinder 22 umschlossenen Raum in einen ersten, dem Ventilsitz zugewandten Regelkolbenraum 23 und einen zweiten, vom Ventilsitz abgewandten Regelkolbenraum 24. Der erste Regelkolbenraum steht über eine Druckfluidverbindung 17 mit dem Kanal 15' des Nebenauslasses 15 in Fluidverbindung.

Im zweiten Regelkolbenraum 24 ist eine Krafterzeugungseinrichtung 3 angeordnet, die aus einer aus Tellerfedern bestehenden Federanordnung 30 besteht, welche sich zwischen dem Regelkolben 21 und einem Schraubeinsatz 32 erstreckt. Der Schraubeinsatz 32 ist axial in das freie Ende des Einsatzstücks 18 eingeschraubt und stützt die Federanordnung 30 gegen den Kolben 21 ab.

Wird der Kolben 10, beaufschlagt durch das bewegbare Element 50, auf die erste Stirnseite 12 des Zylinders 11 hin bewegt (in Figur 1 nach links), so wird das in Kolbenraum 14 vorhandene Druckfluid, zum Beispiel Hydrauliköl, durch den Hauptauslaß 13, die Kanäle 16' und 16'' in den Auslaßkanal 16 und aus diesem in ein nicht gezeigtes Hydraulikreservoir verdrängt. Nähert sich der Kolben 10 der ersten Stirn seite 12, so fährt der zentrale Axialansatz 100 des Kolbens 10 in die zentrale Axialbohrung 130 ein, bis der Außenumfang des Axialansatzes 100 mit dem Innenumfang der Bohrung 130 abdichtet. In diesem Augenblick ist der Fluidstrom durch den Hauptauslaß 13 zum Auslaßkanal 16 unterbrochen, und das in dem Kolbenraum 14 enthaltene Druckfluid kann nur noch den Weg über den Nebenauslaß 15, den Kanal 15', durch das Drosselventil 2 in den Kanal 16' und von diesem durch den Kanal 16'' in den Auslaßkanal nehmen. Aufgrund des vom Drosselventil 2 vorgegebenen Durchlaßquerschnitt zwischen dem Ventilglied 20 und dem Ventilsitz 25 kann nur eine begrenzte Fluidmenge durch das Ventil 2 hindurch zum Auslaßkanal 16 strömen, so daß aufgrund der geringeren Verdrängung des Hydraulikfluids aus dem Kolbenraum 14 die Verfahrgeschwindigkeit des Kolbens abnimmt. Der Kolben und mit ihm das bewegbare Element 50 werden auf diese Weise abgebremst, wodurch die gewünschte Endlagendämpfung erzielt wird.

Ein Teil der durch den Nebenauslaß 15 und den Kanal 15' zum Drosselventil 2 fließenden Hydraulikflüssigkeit dringt durch die Druckfluidverbindung 17 in den ersten Regelkolbenraum 23 ein, das heißt der Druck im ersten Regelkolbenraum 23 entspricht dem Druck im Kolbenraum 14, und dieser Druck erzeugt eine auf den Kolben 21 in Öffnungsrichtung des Drosselventils 2 wirkende Kraft. Diese Öffnungskraft ist der von der Krafterzeugungseinrichtung 3 auf den Regelkolben 21 ausgeübten Kraft entgegengesetzt gerichtet. Auf diese Weise stellt sich eine vom Kräftegleichgewicht der vom Druck im ersten Regelkolbenraum 23 bestimmten Öffnungskraft und der von der Krafterzeugungseinrichtung 3 bestimmten Schließkraft vorgegebene Lage des Regelkolbens 21 im Regelzylinder 22 und damit auch eine von diesem Kräftegleichgewicht abhängige Öffnung des Drosselventils 2 ein. Je stärker der im Kolbenraum 14 herrschende Druck ist, desto größer ist demnach die Öffnung des Drosselventils 2 und desto größer ist der Fluiddurchsatz durch das Drosselventil 2 und damit wiederum der Druckabbau im Kolbenraum 14. Die von der Krafterzeugungseinrichtung 3 erzeugte Schließkraft definiert dabei den im Kolbenraum 14 auftretenden Maximaldruck. Daher kann durch die Vorgabe der von der Krafterzeugungseinrichtung 3 ausgeübten Schließkraft, beispielsweise durch Veränderung der Federhärte der Federanordnung 30 oder der Federvorspannung mittels Verdrehung des Schraubeinsatzes 32 der Maximaldruck im Kolbenraum 14 und damit auch der Abbremsverlauf des Kolbens 10 eingestellt werden.

In Figur 2 ist eine Vorrichtung zur Endlagendämpfung gezeigt, die der Vorrichtung aus Figur 1 ähnlich ist, jedoch für den pneumatischen Betrieb ausgestattet ist. Dazu ist im Innenumfang der zentralen Axialbohrung 130 eine Nut 130' vorgesehen, in die ein Dichtungsring 130'' eingesetzt ist. Der Dichtungsring 130" dichtet beim Eindringen des zentralen Axialansatzes 100 des Kolbens 10 gegen den Außenumfang des Axialansatzes 100 pneumatisch ab. Die Funktionsweise der in Figur 2 gezeigten Vorrichtung ist grundsätzlich dieselbe wie die der in Figur 1 gezeigten hydraulischen Endlagendämpfung.

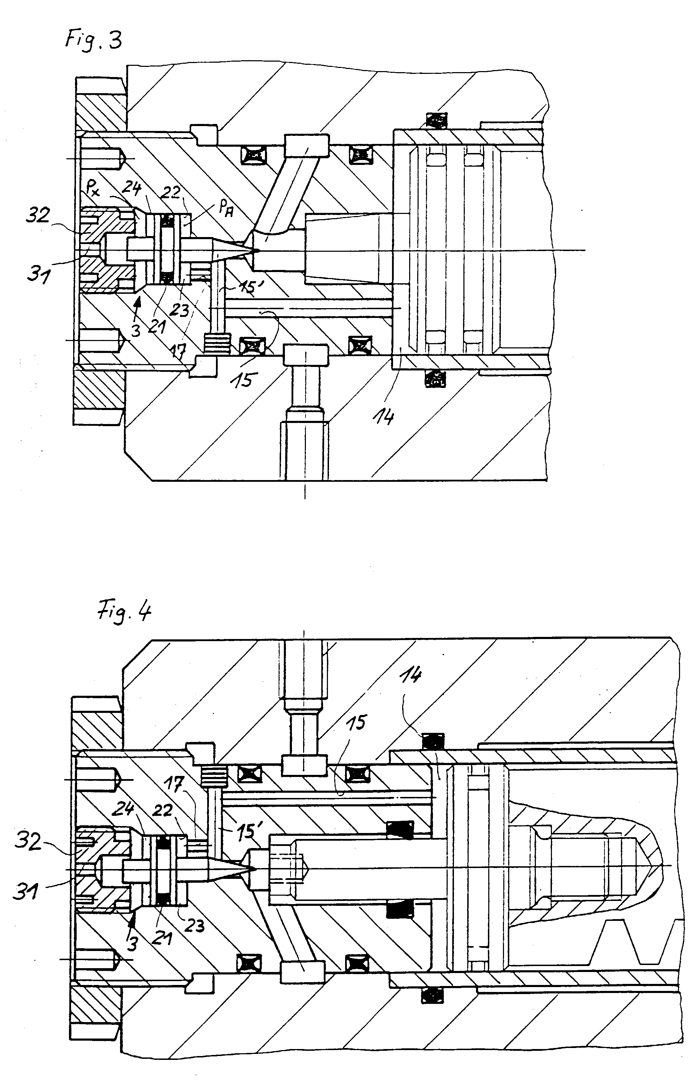

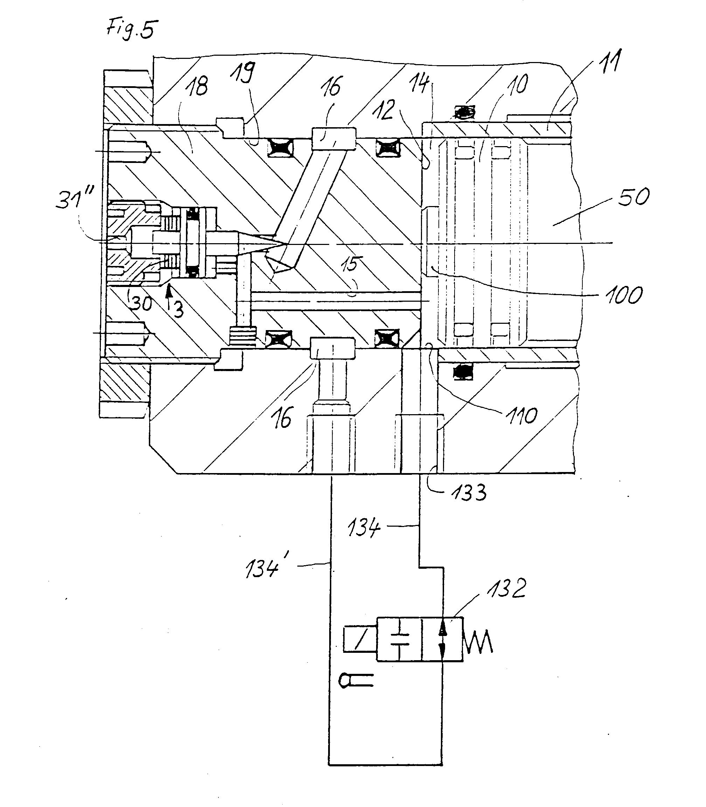

Die Figuren 3 und 4 stellen eine Abwandlung zu den in den Figuren 1 und 2 dargestellten Vorrichtungen zur Endlagendämpfung dar, wobei die Figur 3 eine Endlagendämpfung für den hydraulischen Betrieb und die Figur 4 eine Endlagendämpfung für den pneumatischen Betrieb zeigen. Im Schraubeinsatz 32 ist ein Steuerdruckanschluß 31 für einen Steuerdruck P_{X} vorgesehen, der mit dem zweiten Regelkolbenraum 24 in Verbindung steht. Der Steuerdruck P_{X} wirkt dabei auf den Regelkolben 21 in Schließrichtung des Drosselventils 2 und damit entgegen dem vom Kolbenraum 14 über den Nebenauslaß 15, den Kanal 15' und die Druckfluidverbindung 17 in den ersten Regelkolbenraum 23 geleiteten Druck P_{A}. Daher stellt sich bei den in den Figuren 3 und 4 gezeigten Vorrichtungen zur Endlagendämpfung das auf den Regelkolben 21 und damit auf die Öffnung des Drosselventils 2 wirkende Kräftegleichgewicht zwischen dem Kolbenraumdruck P_{A} und dem Steuerdruck P_{X} ein. Die Federanordnung 30, die bei der Vorrichtung gemäß der Figuren 1 und 2 vorgesehen ist, kann daher hier entfallen. Über den Steuerdruckanschluß 31 kann ein den steuerdruck bildender Druckschwellwert P_{X} vorgegeben werden, über den dann das Bremsverhalten gesteuert werden kann.

In Figur 5 ist eine weitere Abwandlung der Vorrichtung zur hydraulischen oder pneumatischen Endlagendämpfung gezeigt. Der zentrale Axialansatz 100 des Kolbens 10 ist dabei lediglich als kurzes Anschlagelement ausgebildet, das gegen die erste Stirnseite 12, die in dieser Ausführung nicht mit der zentralen Axialbohrung 130 versehen ist, anschlägt. Im Bereich der ersten Stirnseite 12 ist der Zylinder 11 mit einer die seitliche Zylinderwandung 110 durchdringenden Auslaßbohrung 133 versehen, die über eine Leitung 134 mit einem beispielsweise magnetisch betätigbaren Sperrventil 132 in Fluidverbindung steht. Vom Absperrventil 132 führt eine weitere Leitung 134' zum Auslaßkanal 16, der - wie bei allen anderen Ausführungen - als Ringkanal im Außenumfang des Einsatzstücks 18 und der dieses aufnehmenden Gehäusebohrung 19 ausgebildet ist.

Bewegt sich der Kolben 10 zusammen mit dem bewegbaren Element 50 axial innerhalb des Zylinders 11 auf die erste Stirnseite 12 hin (in Figur 5 nach links), so dringt der größte Teil des im Kolbenraum 14 vorhandenen Hydraulikfluids, bzw. der in diesem Raum enthaltenen Luft, aus dem Kolbenraum 14 durch die Auslaßbohrung 133 und die Leitung 134 zum Absperrventil 132. Ist dieses geöffnet, so fließt das Hydraulikfluid bzw. die Luft durch die Leitung 134' zum Auslaßkanal 16 bzw. zu einem mit dem Auslaßkanal 16 in Verbindung stehenden Reservoir. Sobald das Absperrventil 132 geschlossen wird, kann das Hydraulikfluid bzw. die Luft nur noch durch den Nebenauslaß 15 entweichen, und die Bewegung des Kolbens 10 sowie des bewegbaren Elements 50 wird gedämpft abgebremst, wie dies bereits in Verbindung mit Figur 1 beschrieben worden ist. Vorteil der in Figur 5 gezeigten Vorrichtung ist, daß die abgedämpfte Abbremsung des Kolbens 10 und des bewegbaren Elements 50 auch in Zwischenstellungen und nicht nur in der Endlage des Kolbens 10 erfolgen kann.

Wird der Anschluß 31'' durch Druck beaufschlagt, so kann das System nach gedämpfter Abbremsung an beliebiger Stelle gestoppt werden.

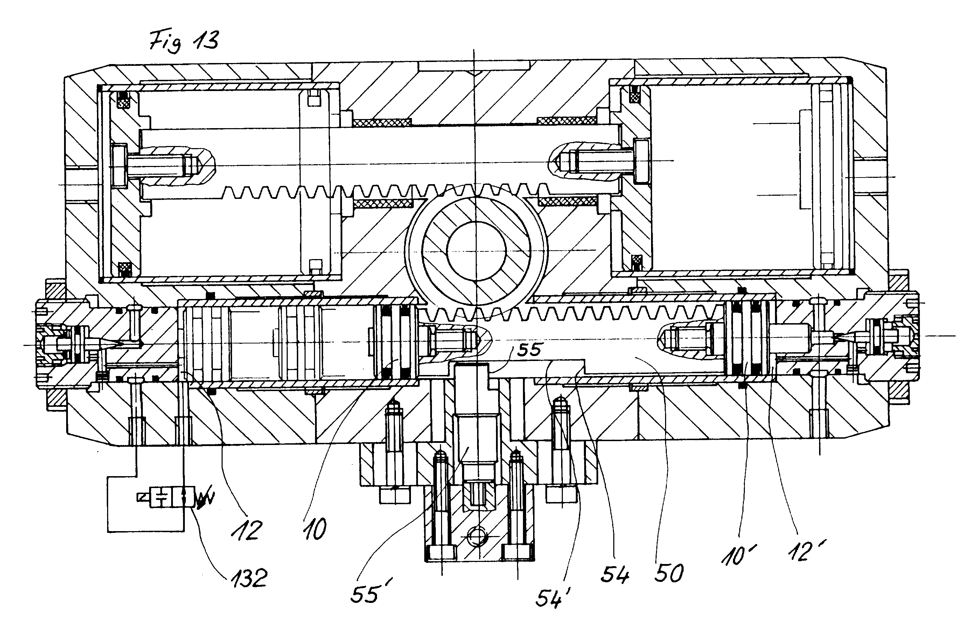

Ist am bewegbaren Element 50 beispielsweise ein Zwischenanschlag 54 vorgesehen, wie dies in Figur 13 gezeigt ist, so kann durch Sperren des Absperrventils 132 bei Annäherung des Zwischenanschlags 54 an den zugordneten Gegenanschlag 55 eine gedämpfte Abbremsung des bewegbaren Elements 50 erzielt werden. Ein Weiterverfahren des bewegbaren Elements 50 ist durch Öffnen des Ventils 132 und Zurückziehen des Gegenanschlags 55 aus der Verfahrbahn des bewegbaren Elements 50 jederzeit möglich.

Kurz bevor der Kolbenansatz 100 die erste Stirnseite 12 erreicht, wird wiederum das Absperrventil 132 gesperrt, so daß eine gedämpfte Bremsung der Axialbewegung des Kolbens 10 und mit ihm des bewegbaren Elements 50 beim Anfahren des Axialansatzes 100 an die erste Stirnseite 12 erfolgt.

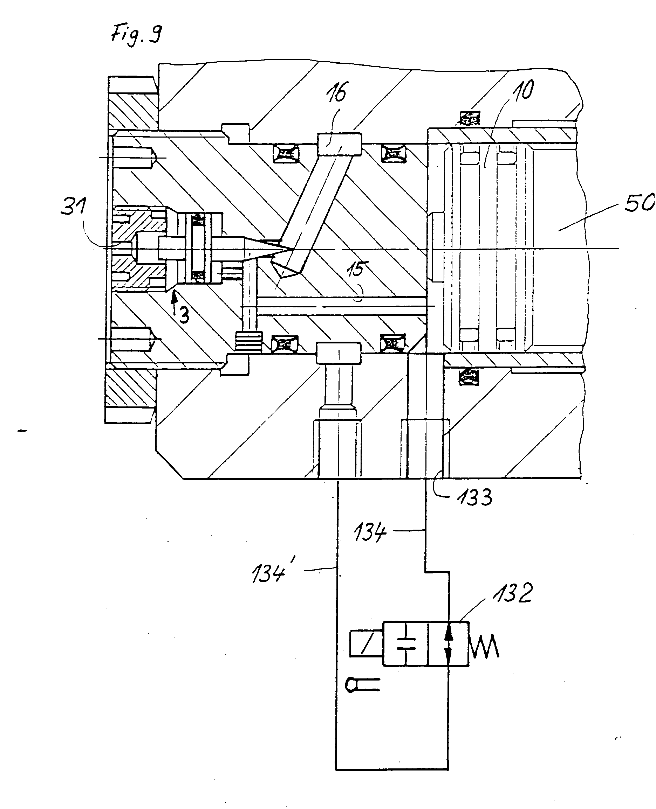

Während bei der Vorrichtung zur Endlagendämpfung gemäß Figur 5 die Krafterzeugungseinrichtung 3 durch die aus Figur 1 bekannte Federanordnung 30 gebildet ist, zeigt die Vorrichtung nach Figur 9 eine Vorrichtung zur Endlagendämpfung, bei der die Krafterzeugungseinrichtung 3 einen Steuerdruckanschluß 31 aufweist und entsprechend der Ausgestaltung in den Figuren 3 und 4 ausgebildet ist. Die in Figur 9 dargestellte Vorrichtung entspricht im übrigen der in Figur 5 dargestellten Vorrichtung.

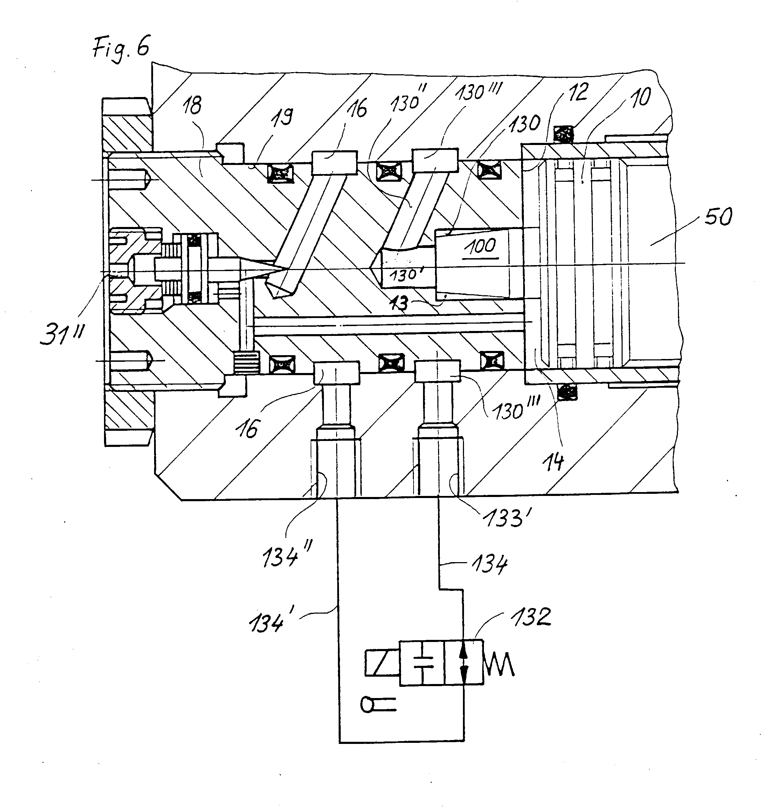

Figur 6 zeigt eine Kombination der aus den Figuren 1 und 5 gezeigten Vorrichtungen. Der Kolben 10 ist dabei mit einem zentralen Axialansatz 100 versehen, der in eine zentrale Axialbohrung 130 in der ersten Stirnseite 12 abdichtend eindringt, wie dies in Bezug auf Figur 1 beschrieben worden ist. Von dem durch die zentrale Axialbohrung 130 gebildeten Hauptauslaß 13 besteht eine Fluidverbindung über einen axialen Stichkanal 130' sowie einen sich im wesentlichen radial erstreckenden Kanal 130" zu einem Ringkanal 130''', der zum Teil im Außenumfang des Einsatzstücks 18 und zum anderen Teil im Innenumfang der Gehäusebohrung 19 ausgebildet ist. Der Ringkanal 130''' steht über eine Radialbohrung 133' und eine Leitung 134 mit dem Absperrventil 132 in Verbindung. Vom Absperrventil führt eine Fluidverbindung 134' und eine Radialbohrung 134'', wie dies in Figur 5 gezeigt ist, zum Auslaßkanal 16 bzw. einem mit diesem verbundenen Reservoir.

Die Funktionsweise der in Figur 6 gezeigten Vorrichtung ist ähnlich der der in Figur 5 gezeigten Vorrichtung, wobei jedoch für eine Endlagendämpfung kein gesondertes Sperren des Absperrventils 132 erforderlich ist, da der Fluidstrom durch den Hauptauslaß 13 beim abdichtenden Eindringen des zentralen Axialansatzes 100 in die zentrale Axialbohrung 130 quasi automatisch erfolgt. Die Betätigung des Absperrventils 132 ist daher nur noch erforderlich für das gedämpfte Anbremsen von Zwischenstellungen. Eine nicht gezeigte Abwandlung der in Figur 6 gezeigten Vorrichtung mit einer zentralen Axialbohrung 130 und einem zentralen Axialansatz 100, welche, wie in Verbindung mit Figur 2 beschrieben worden ist, ausgestaltet sind, gestattet den Einsatz von Luft als Medium und damit die pneumatische Endlagendämpfung.

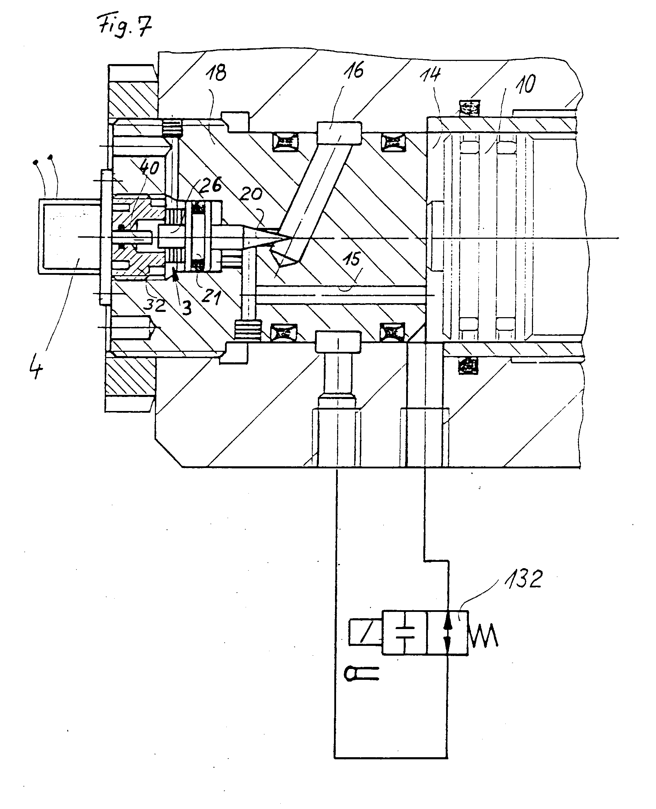

Eine weitere Abwandlung der in Figur 5 gezeigten Vorrichtung zur Endlagendämpfung ist in Figur 7 dargestellt. An der freien Stirnseite des Einsatzstücks 18 ist ein Betätigungsglied 4 vorgesehen, das mit einem Betätigungsstößel 40 versehen ist, der den Schraubeinsatz 32 axial durchdringt und auf einen Axialansatz 26 des Regelkolbens 21 axial einwirkt. Durch Betätigung des Betätigungsgliedes 4, welches beispielsweise von einem Schaltmagnet oder von einem Schaltkolben gebildet sein kann, wird der Betätigungsstößel 40 axial gegen den Axialansatz 26 des Regelkolbens 21 bewegt und drückt den Regelkolben 21 und mit ihm das Ventilglied 20 in Richtung auf den Ventilsitz 25 des Drosselventils 2, so daß dieses gesperrt wird. Das Sperren des Drosselventils 2 bewirkt eine Unterbrechung des durch den Nebenauslaß 15 fließenden Fluids aus dem Kolbenraum 14. Ist gleichzeitig das Absperrventil 132 gesperrt, so kann das Hydraulikfluid auch nicht aus dem Kolbenraum 14 durch das Absperrventil 132 in den Auslaßkanal 16 dringen; eine Axialbewegung des Kolbens 10 ist daher nicht mehr möglich. Auf diese Weise kann durch ein abgestimmt aufeinanderfolgendes Schließen des Absperrventils 132 und ein nachfolgendes Betätigen des gungsgliedes 4 und ein damit verbundenes Schließen des selventils 2 zunächst eine gedämpfte Abbremsung der geschwindigkeit des Kolbens 10 und anschließend ein Stillstand des Kolbens 10 in einer beliebigen Zwischenstellung bewirkt werden.

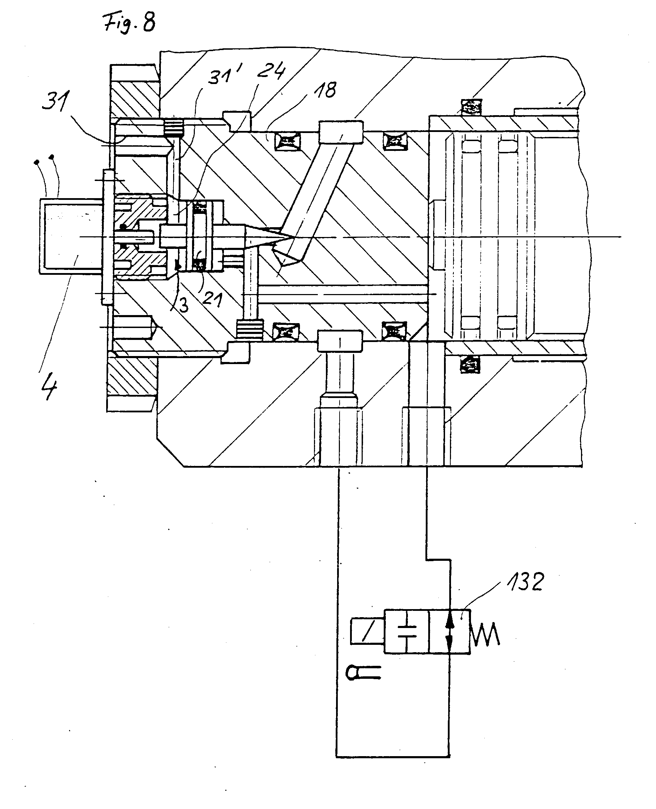

Figur 8 zeigt eine Abwandlung der in Figur 7 dargestellten Vorrichtung zur Endlagendämpfung, bei welcher zusätzlich zum Betätigungsglied 4 ein Steuerdruckanschluß 31 in der freien Stirnseite des Einsatzstücks 18 vorgesehen ist, welcher über einen Kanal 31' mit dem zweiten Regelkolbenraum 24 verbunden ist. Auf diese Weise wird die Krafterzeugungseinrichtung 3 von dem durch den Steuerdruckanschluß 31 einwirkenden Steuerdruck P_{X} auf den Kolben 21 gebildet, wie dies in Verbindung mit den Figuren 3 bzw. 4 beschrieben worden ist.

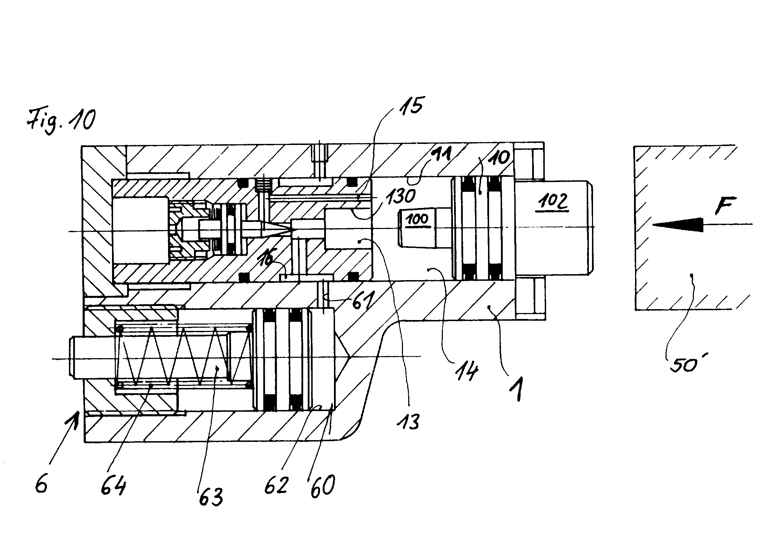

Figur 10 zeigt die Anwendung der Vorrichtung zur Endlagendämpfung gemäß der Erfindung in einem Anschlagelement. Im Gehäuse 1 des Anschlagelementes ist die Zylinderbohrung 11 ausgebildet, in der der Kolben 10 axial verschieblich aufgenommen ist. Der Kolben 10 ist an seiner vom Kolbenansatz 100 abgewandten Seite mit einem axial aus dem Gehäuse 1 herausragenden Anschlagpuffer 102 versehen. Ein bewegbares Element 50' wird in Richtung des Pfeiles F auf den Anschlagpuffer 102 zubewegt und schlägt gegen diesen an, wobei der Kolben 10 im Zylinder 11 eine in Figur 10 nach links gerichtete Axialbewegung vollführt. Dabei dringt der Kolbenansatz 100 in die Axialbohrung 130 ein, und die gedämpfte Abbremsung des Kolbens 10 erfolgt, wie dies im Zusammenhang mit Figur 1 beschrieben worden ist. Das durch den Hauptauslaß 13 und durch den Nebenauslaß 15 aus dem Kolbenraum 14 austretende Hydraulikfluid ringförmigen Auslaßkanal 16 durch eine Radialbohrung 61 des Gehäuses 1 in den Kolbenraum 60 einer Ausgleichseinrichtung 6 geleitet, wodurch ein in einem Ausgleichszylinder 62 axial verfahrbarer Ausgleichskolben 63 gegen die Kraft einer Druckfeder 64 verschoben wird. Nachdem die Abbremsung des Kolbens 10 und damit des bewegbaren Elements 50' erfolgt ist, wird der Ausgleichskolben 63 unter der Kraft der Druckfeder 64 wieder zurückbewegt, wodurch das Hydraulikfluid aus dem Ausgleichskolbenraum 60 durch die Radialbohrung 61, den Auslaßkanal 16 und den Hauptauslaß 13 wieder zurück in den Kolbenraum 14 drängt und dabei den Kolben 10 wieder in seine Ausgangsposition verfährt, in welcher der Anschlagpuffer 102 aus dem Gehäuse 1 herausragt.

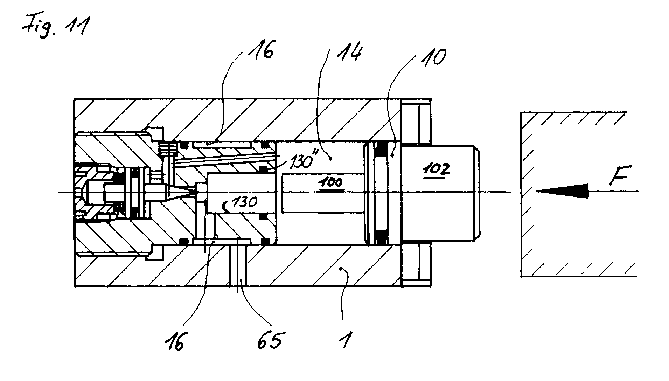

Figur 11 zeigt die Anwendung einer erfindungsgemäßen Vorrichtung zur Endlagendämpfung als pneumatisches Anschlagelement. Der Kolben 10 ist hier, ebenso wie im Ausführungsbeispiel gemäß Figur 10 mit einem Anschlagpuffer 102 versehen, der aus dem Gehäuse 1 axial herausragt. Die Ausgestaltung des zentralen Axialansatzes 100 des Kolbens 10 sowie der mit einer Dichtung 130'' versehenen zentralen Axialbohrung 130 entspricht dabei der in Verbindung mit Figur 2 beschriebenen Ausgestaltung. Der als Ringraum ausgebildete Auslaßkanal 16 steht über einen Druckluftanschluß 65 mit einer Druckluftquelle bzw. einem Druckluftspeicher in Verbindung. Beim Eindringen des Kolbens 10 aufgrund einer auf ihn ausgeübten Kraft F wird die Luft aus dem Kolbenraum 14 verdrängt, wie dies in Verbindung mit Figur 2 beschrieben worden ist. Die Druckluft entweicht dabei aus dem Auslaßkanal 16 durch den Druckluftanschluß 65 in den Druckspeicher und kehrt nach Entlastung des Kolbens 10 wieder zurück und bewegt den Kolben 10 und mit ihm den Anschlagpuffer 102 wieder in die Ausgangsstellung, in der der Anschlagpuffer 102 axial aus dem Gehäuse 1 herausragt.

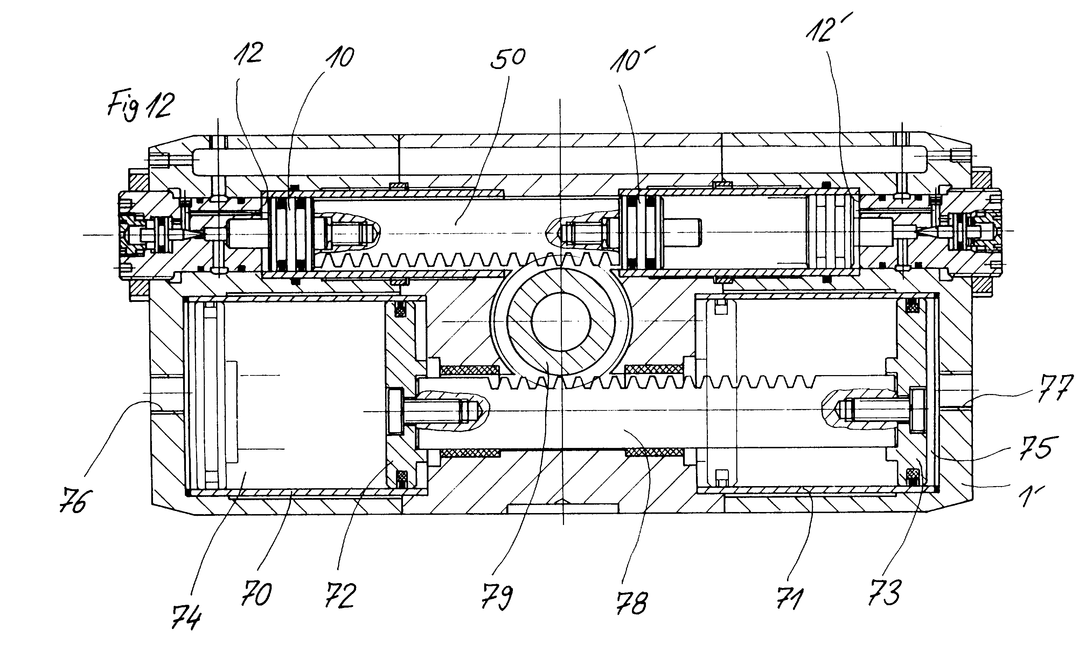

Figur 12 zeigt die Verwendung der Vorrichtung zur Endlagendämpfung bei einem pneumatischen Rotationsantrieb. In einem Gehäuse 1' sind koaxial zueinander zwei in Achsrichtung voneinander beabstandete Pneumatikzylinder 70, 71 vorgesehen, in denen jeweils ein Pneumatikkolben 72, 73 verschiebbar aufgenommen ist. Der jeweils vom Kolben 72; 73, vom Zylinder 70; 71 und vom Gehäuse 1' umschlossenen Kolbenraum 74; 75 ist über einen Druckluftanschluß 76, 77 schaltbar mit einer Druckluftquelle verbunden.

Die Kolben 72, 73 sind jeweils an den axialen Enden einer Zahnstange 78 montiert. Die Zahnstange 78 steht in kämmender Verbindung mit einer Abtriebswelle 79 des Rotationsantriebs.

Auf der von der Zahnstange 78 abgewandten Seite der Welle 79 ist eine das bewegbare Element 50 darstellende Zahnstange vorgesehen, die mit dem Zahnrad der Antriebswelle 79 in kämmender Verbindung steht und an ihren axialen Enden mit dem Kolben 10 einer ersten Vorrichtung zur Endlagendämpfung und einem Kolben 10' einer zweiten Vorrichtung zur Endlagendampfung verbunden ist. Sowohl die Pneumatikkolben 72, 73 als auch die Kolben 10, 10' der Endlagendämpfung treten wechselweise in Aktion. Eine Druckbeaufschlagung eines Pneumatikkolbenraumes 74, 75 bewirkt ein Verschieben des zugeordneten Kolbens 72, 73 und damit ein Verschieben der Zahnstange 78, wodurch die Welle in Rotation versetzt und gleichzeitig die das bewegbare Element 50 bildende Zahnstange auf der anderen Seite der Welle in entgegengesetzter Richtung angetrieben wird. Der sich der zugehörigen Stirnwand 12, 12' nähernde Kolben 10, 10' wird dabei abgebremst, wie dies bereits ausführlich, beispielsweise in Verbindung mit Figur 1, beschrieben worden ist. Dabei wird entsprechend die Rotationsbewegung der Welle 79 in gedämpfter Weise abgebremst.

In Figur 13 ist ein ähnlicher Rotationsantrieb wie in Figur 12 dargestellt, bei dem die das bewegbare Element 50 bildende Zahnstange eine Aussparung 54' aufweist, die einen Axialanschlag 54 bildet. In die Aussparung 54' greift ein im wesentlichen rechtwinklig zur Axialrichtung des bewegbaren Elements 50 verschieblicher Anschlagzapfen 55' ein, der an seinem in die Aussparung 54' eingreifenden Ende mit einer Anschlagkante 55 versehen ist, welche mit dem Anschlag 54 zusammenwirkt, um das bewegbare Element 50 in einer Zwischenstellung anzuhalten, wie bereits beschrieben worden ist.

Zur Dämpfung der bezüglich des Anschlags 54 geforderten Bremsbewegung ist ein Absperrventil 132 vorgesehen, das bei Annäherung des Anschlags 54 an die Anschlagkante 55 gesperrt wird und so eine gedämpfte Bremsung einleitet.

## Patentansprüche

1. Vorrichtung zur Endlagendämpfung eines bewegten Systems bestehend aus
einem vom bewegten System beaufschlagten Kolben (10), der in einem Zylinder (11) axial verschieblich aufgenommen ist,
einem im Bereich einer ersten Stirnseite (12) des Zylinders (11) vorgesehenen absperrbaren Hauptauslaß (13) für im vom Kolben (10) und vom Zylinder (11) umgrenzten Kolbenraum (14) enthaltenes Druckfluid,
einem mit dem Hauptauslaß (13) verbundenen Auslaßkanal (16),
einem im Bereich der ersten Stirnseite (12) vorgesehenen Nebenauslaß (15) für das Druckfluid sowie einem den Nebenauslaß (15) mit dem Auslaßkanal (16) verbindenden Drosselventil (2),
wobei
das Ventilglied (20) des Drosselventils (2) mit einem Regelkolben (21) verbunden ist, der in einem Regelzylinder (22) axial verschieblich aufgenommen ist und diesen in einen ersten Regelkolbenraum (23) und einen zweiten Regelkolbenraum (24) unterteilt,
eine Druckfluidverbindung (17) zwischen dem Nebenauslaß (15) und dem ersten Regelkolbenraum (23) vorgesehen ist und
im zweiten Regelkolbenraum (24) eine in Richtung einer Volumenverringerung des ersten Regelkolbenraums (23) auf den Regelkolben (21) wirkende Krafterzeugseinrichtung (3) vorgesehen ist, die insbesondere aus einer den Regelkolben (21) beaufschlagenden, vorzugsweise von Tellerfedern gebildeten Federanordnung (30) besteht,
dadurch **gekennzeichnet,**
daß die Krafterzeugungseinrichtung (3) einen in den zweiten Regelkolbenraum (24) mündenden Steuerdruckanschluß (31) für ein auf den Regelkolben (21) wirkendes Steuerdruckfluid umfaßt.

2. Vorrichtung nach Anspruch 1, dadurch **gekennzeichnet,**
daß der Hauptauslaß (13) als zentrale Axialbohrung (130) in der ersten Stirnseite (12) des Zylinders (11) ausgebildet ist und daß der Kolben (10) mit einem in die zentrale Axialbohrung (130) abdichtend einfahrbaren zentralen Axialansatz (100) versehen ist.

3. Vorrichtung nach einem der vorhergehenden Ansprüche,
dadurch **gekennzeichnet,**
daß ein Betätigungsglied (4) vorgesehen ist, mittels welchem das Ventilglied (20) des Drosselventils (2) gegen die auf den Regelkolben (21) wirkende Öffnungskraft in seine Schließstellung bewegbar und dort festhaltbar ist, wobei das Betätigungsglied vorzugsweise elektromagnetisch betätigbar oder pneumatisch oder hydraulisch druckbetätigbar ist.

4. Vorrichtung nach einem der vorhergehenden Ansprüche,
dadurch **gekennzeichnet,**
daß der Hauptauslaß (13) über eine mit einem Absperrventil (132) versehene Fluidverbindung mit dem Auslaßkanal (16) in Verbindung steht und vorzugsweise eine Zwischenanschlagvorrichtung für das bewegbare Element (50) vorgesehen ist, die insbesondere vom Betätigungsglied (4) oder vom Druckfluid im Steueranschluß (31'') gebildet ist.

5. Vorrichtung nach einem der vorhergehenden Ansprüche,
dadurch **gekennzeichnet,**
daß die Zwischenanschlagvorrichtung von einem in einer Aussparung (54') des bewegbaren Elements (50) ausgebildeten Anschlag (54) sowie einer Anschlagkante (55) eines in die Aussparung (54') von außen hineinbewegbaren Anschlagzapfens (55') gebildet ist.

6. Vorrichtung nach einem der vorhergehenden Ansprüche,
dadurch **gekennzeichnet,**
daß der Hauptauslaß (13) in der seitlichen Zylinderwandung (110) im Bereich der ersten Stirnseite vorgesehen ist, und daß der Nebenauslaß (15) als dezentrale, vorzugsweise achsparallele Bohrung (150) in der ersten Stirnseite (12) des Zylinders (11) ausgebildet ist.

7. Vorrichtung nach einem der vorhergehenden Ansprüche,
dadurch **gekennzeichnet,**
daß der Zylinder (11) axial einseitig offen ausgebildet ist, daß der Kolben (10) an seiner von der ersten Stirnseite (12) des Zylinders (11) abgewandten Seite mit einem Ansatz versehen ist, der aus dem Zylinder (11) herausragt und als Anschlagpuffer (102) für das bewegte System ausgebildet ist und daß der Kolben (10) im Zylinder (11) begrenzt axial bewegbar und in eine Stellung vorgespannt ist, in der der Anschlagpuffer (102) im wesentlichen maximal aus dem Zylinder (11) herausragt.

8. Vorrichtung nach Anspruch 7,
dadurch **gekennzeichnet,**
daß zur Vorspannung des Kolbens (11) eine hydaulische Ausgleichseinrichtung (6) vorgesehen ist die aus einer Kolben- / Zylindereinheit (63, 62) besteht, deren Kolbenraum (60) über eine Fluidverbindung (61) mit dem Kolbenraum (14) verbunden ist und deren Ausgleichskolben (63) der Vorspannung einer Feder (64) unterliegt, wobei zur Vorspannung des Kolbens (11) vorzugsweise ein mit dem Kolbenraum (14) in Fluidverbindung stehender Druckluftanschluß (65) vorgesehen ist.

9. Vorrichtung nach einem der vorhergehenden Ansprüche,
dadurch **gekennzeichnet,**
daß der Kolben (10) an seiner von der ersten Stirnseite (12) des Zylinders (11) abgewandten Seite mit einem Ende (51) eines in Axialrichtung des Kolbens (10) translatorisch bewegbaren Elementes (50) des bewegten Systems verbunden ist, wobei vorzugsweise das translatorisch bewegbare Element (50) von einem Rotationsantrieb (52) beaufschlagt ist.

10. Vorrichtung nach einem der vorhergehenden Ansprüche,
dadurch **gekennzeichnet,**
daß ein weiterer Kolben (10') am anderen Ende (53) des translatorisch bewegbaren Elements (50) vorgesehen ist und
daß der weitere Kolben (10') Teil einer an der zweiten Stirnseite (12') des Zylinders (11) im wesentlichen baugleich ausgebildeten Vorrichtung zur Endlagendämpfung ist.

## Claims

1. Apparatus for the end position damping of a moved system, comprising a piston (10) loaded by the moved system and axially displaceably received in a cylinder (11), a closeable main outlet (13) provided in the region of a first end face (12) of the cylinder (11) for pressure fluid contained in the piston space (14) bounded by the piston (10) and by the cylinder (11), an outlet passage (16) connected to the main outlet (13), an auxiliary outlet (15) for the pressure fluid provided in the region of the first end face (12) and also a restrictor valve (2) connecting the auxiliary outlet (15) to the outlet passage (16), wherein the valve member (20) of the restrictor valve (2) is connected to a regulating piston (21) which is axially displaceably received in a regulating cylinder (22) and subdivides the latter into a first regulating piston space (23) and a second regulating piston space (24), wherein a pressure fluid connection (17) is provided between the auxiliary outlet (15) and the first regulating piston space (23), and wherein a force generating means (3) acting on the regulating piston (21) in the direction of a volume reduction of the first regulating piston space (23) is provided in the second regulating piston space (24) and consists in particular of a spring arrangement (30) which is preferably formed by plate springs and which acts on the regulating piston (21), characterised in that the force generating means (3) includes a pressure control connection (31) opening into the second regulating piston space (24) for a pressure control fluid acting on the regulating piston (21).

2. Apparatus in accordance with claim 1, characterised in that the main outlet (13) is formed as a central axial bore (130) in the first end face (12) of the cylinder (11), and in that the piston (10) is provided with a central axial portion (100) which can be sealingly moved into the central axial bore (130).

3. Apparatus in accordance with one of the preceding claims, characterised in that an actuating member (4) is provided by means of which the valve member (20) of the restrictor valve (2) is movable into its closed position against the opening force acting on the regulating piston (21) and can be held in this closed position, with the actuating member preferably being electromagentically actuatable or pneumatically or hydraulically pressure actuatable.

4. Apparatus in accordance with one of the preceding claims, characterised in that the main outlet (13) stands in communication with the outlet passage (16) via a fluid connection provided with a blocking valve (132) and in that an intermediate abutment device is preferably provided for the movable element (50) and is in particular formed by the actuating member (4) or by pressure fluid in the control connection (31").

5. Apparatus in accordance with one of the preceding claims, characterised in that the intermediate abutment device is formed by an abutment (54) formed in a cut-out (54') of the movable element (50) and also by an abutment edge (55) of an abutment spigot (55') which can be moved into the cut-out (54') from the outside.

6. Apparatus in accordance with one of the preceding claims, characterised in that the main outlet (13) is provided in the lateral cylinder wall (110) in the region of the first end face and in that the auxiliary outlet (15) is formed as a decentral, preferably axially parallel bore (150) in the first end face (12) of the cylinder (11).

7. Apparatus in accordance with one of the preceding claims, characterised in that the cylinder (11) is made open at one axial end; in that the piston (10) is provided at its end remote from the first end face (12) of the cylinder (1) with an abutment which projects out of the cylinder (11) and is formed as an abutment buffer (102) for the moved system; and in that the piston (10) is restrictedly axially movable in the cylinder (11) and is biased into a position in which the abutment buffer (102) projects substantially to the maximum amount out of the cylinder (11).

8. Apparatus in accordance with claim 7, characterised in that a hydraulic compensation device (6) is provided for the bias of the piston (11) and consists of a piston in cylinder unit (63, 62), the piston space (60) of which is connected via a fluid connection (61) to the piston space (14) and the compensation piston (63) of which is subjected to the bias of a spring (64), with a pressure air connection (65) standing in fluid connection with the piston space (14) preferably being provided for the bias of the piston (11).

9. Apparatus in accordance with one of the preceding claims, characterised in that the piston (10) is connected at its side remote from the first end face (12) of the cylinder (11) to an end (51) of an element (50) of the moved system which can be translationally moved in the axial direction of the piston (10), with the translationally movable element (50) preferably being acted on by a rotational drive (52).

10. Apparatus in accordance with one of the preceding claims, characterised in that a further piston (10') is provided at the other end (53) of the translationally movable element (50), and in that the further piston (10') is part of an apparatus constructed in substantially the same way for end position damping at the second end face (12') of the cylinder (11).

## Revendications

1. Dispositif amortisseur de fin de course pour un système mobile, comprenant :
- un piston (10) sollicité par le système mobile, qui est reçu en déplacement axial dans un cylindre (11),
- une sortie principale (13), pour le fluide sous pression contenu dans la chambre de piston (14) délimitée par le piston (10) et par le cylindre (11), ladite sortie principale étant susceptible d'être obturée et étant prévue dans la région d'une première face frontale (12) du cylindre (11),
- un canal de sortie (16) relié à la sortie principale (13),
- une sortie auxiliaire (15), prévue dans la région de la première face frontale (12), pour le fluide comprimé, ainsi qu'une valve d'étranglement (2) qui relie la sortie auxiliaire (15) et le canal de sortie (16),
dans lequel :
- l'organe de valve (20) de la valve d'étranglement (2) est relié à un piston de réglage (21), qui est reçu en déplacement axial dans un cylindre de réglage (22) et subdivise celui-ci en une première chambre de piston de réglage (23) et une seconde chambre de piston de réglage (24),
- une liaison à fluide sous pression (17) est prévue entre la sortie auxiliaire (15) et la première chambre de piston de réglage (23), et
- dans la seconde chambre de piston de réglage (24) est prévu un dispositif de production de force (3) qui agit sur le piston de réglage (21) dans la direction d'une réduction de volume de la première chambre de piston de réglage (23), ce dispositif étant en particulier constitué par un agencement à ressort (30) qui sollicite le piston de réglage (21), et qui est de préférence formé par des ressorts Belleville,
caractérisé en ce que le dispositif de production de force (3) comprend un raccord de pression de commande (31), qui débouche dans la seconde chambre piston de réglage (24), pour un fluide sous pression de commande qui agit sur le piston de réglage (21).

2. Dispositif selon la revendication 1, caractérisé en ce que la sortie principale (13) est réalisée sous la forme d'un perçage axial central (130) dans la première face frontale (12) du cylindre (11), et en ce que le piston (10) est pourvu d'un talon axial central (10) susceptible d'être introduit de façon étanche dans le perçage axial central (30).

3. Dispositif selon l'une des revendications précédentes, caractérisé en ce qu'il est prévu un organe d'actionnement (4), au moyen duquel l'organe de valve (20) de la valve à étranglement (2) peut être déplacé, jusque dans sa position de fermeture et peut y être fermement retenu, à l'encontre de la force d'ouverture qui agit sur le piston de réglage (21), dans lequel l'organe d'actionnement peut être actionné de préférence par voie électromagnétique, ou peut être actionné sous pression par voie pneumatique ou hydraulique.

4. Dispositif selon l'une des revendications précédentes, caractérisé en ce que la sortie principale (13) est en liaison avec le canal de sortie (16) par l'intermédiaire d'une liaison à fluide pourvue d'une valve de blocage (132), et en ce qu'il est de préférence prévu un dispositif à butée intermédiaire pour l'élément mobile (50), qui est en particulier formé par l'organe d'actionnement (4) ou par le fluide sous pression dans le raccord de commande (31").

5. Dispositif selon l'une des revendications précédentes, caractérisé en ce que le dispositif à butée intermédiaire est formé par une butée (54) réalisée dans un évidement (54') de l'élément mobile (50), ainsi que par une arête de butée (55) d'un tenon de butée (55') susceptible d'être déplacé en introduction depuis l'extérieur dans l'évidement (54').

6. Dispositif selon l'une des revendications précédentes, caractérisé en ce que la sortie principale (13) est prévue dans la paroi latérale du cylindre (110) dans la région de la première face frontale, et en ce que la sortie auxiliaire (15) est réalisée sous forme d'un perçage décentré et de préférence parallèle à l'axe, dans la première face frontale (12) du cylindre (11).

7. Dispositif selon l'une des revendications précédentes, caractérisé en ce que le cylindre (11) est réalisé ouvert d'un coté dans le sens axial, en ce que le piston (10) est pourvu d'un talon de son côté détourné de la première face frontale (12) du cylindre (11), ledit talon dépassant hors du cylindre (11) et étant réalisé sous forme d'un tampon de butée (102) pour le système mobile, et en ce que le piston (10) dans le cylindre (11) est mobile axialement de façon limitée et est précontraint dans une position dans laquelle le tampon de butée (102) dépasse sensiblement au maximum hors du cylindre (11).

8. Dispositif selon la revendication 7, caractérisé en ce que pour précontraindre le piston (11) on prévoit un dispositif de compensation hydraulique (6) qui est constitué par une unité à piston-et-cylindre (63, 62), dont la chambre de piston (62) est reliée à la chambre de piston (14) par une liaison de fluide (61), et dont le piston de compensation (63) est soumis à la précontrainte d'un ressort (64), et pour la précontrainte du piston (11) il est de préférence prévu un raccord à air comprimé (65) qui est en liaison fluide avec la chambre de piston (14).

9. Dispositif selon l'une des revendications précédentes, caractérisé en ce que le piston (10) est relié, sur son côté détourné de la première face frontale (12) du cylindre (11), à une extrémité (51) d'un élément (50), mobile en translation en direction axiale du piston (10), du système mobile, et l'élément mobile en translation (50) est de préférence susceptible d'être soumis à un entraînement en rotation.

10. Dispositif selon l'une des revendications précédentes, caractérisé en ce qu'il est prévu un autre piston (10') à l'autre extrémité (53) de l'élément mobile en translation (50), et en ce que l'autre piston (10') fait partie d'un dispositif amortisseur de fin de course réalisé avec une structure essentiellement identique au niveau de la seconde face frontale (12') du cylindre (11).
